# EUROPEAN PATENT SPECIFICATION

(11) **EP 0 480 435 B1**
(45) Date of publication and mention of the grant of the patent: **30.08.1995**
(21) Application number: 91117316.9
(22) Date of filing: 10.10.1991
(51) Int. Cl.: C08F 10/02, C08F 4/655, C08F 4/656

(54) **Solid component of a catalyst for the (co)polymerization of ethylene**
Feste Komponente eines Katalysators für (Ko)-Polymerisation von Äthylen
Composant solide d'un catalyseur pour la (co)polymerisation d'éthylène

(30) Priority: 11.10.1990 IT 2171190
(43) Date of publication of application: 15.04.1992
(73) Proprietor: ENICHEM S.p.A., 20124 Milano (IT)
(72) Inventor: Luciani, Luciano, I-44100 Ferrara (IT); Pondrelli, Maddalena, I-40054 Budrio, Bologna (IT); Invernizzi, Renzo, I-20147 Milan (IT); Borghi, Italo, I-44100 Ferrara (IT)
(74) Representative: Weinhold, Peter, Dr.

(56) References cited:
- EP-A- 0 446 989
- US-A- 4 359 561
- US-A- 5 024 982

## Description

The present invention relates to a process for the preparation of a solid component of a catalyst and to the use of such catalyst component in the polymerization of ethylene and the copolymerization of ethylene, preferably with alpha-olefins.

It is known that ethylene, or generally alpha-olefins, can be polymerized at low pressure with Ziegler-Natta catalysts. These catalysts are usually composed of a compound of elements from subgroups IV to VI of the periodic table (transition metal compounds), mixed with an organometallic compound, or hydride, of the elements of groups I to III of the periodic table.

Catalysts are also known in the art, in which the transition metal compound is supported on a solid carrier, either organic or inorganic, and sometimes physically and/or chemically treated. Examples of such solid carriers are the oxygenated compounds of bivalent metals (such as oxides, inorganic oxygenated salts and carboxylates) or hydroxychlorides or chlorides of divalent metals.

Solid components of catalysts are already known in the art which are obtained by activating a complex containing magnesium, titanium, halogen, alkoxy groups and an electron donor with an aluminium halide. This complex can be deposited on a porous carrier and then activated, thereby affording solid catalyst components which are particularly suitable for the homo- or copolymerization of ethylene in the gas phase. This technique is described, e.g., in US-A-4,354,009, 4,359,561, 4,370,456, 4,379,758 and 4,383,095.

These supported catalysts allow the production of polyethylene in a flowing granulated form. Problems often arise, however, caused by the limited rheology of the polymer due to the presence of fines and the friability of the granules. Another problem is the low productivity, referring to the quantity of polymer which can be obtained per weight unit of catalyst.

It is now been found that it is possible to obtain solid components of Ziegler-Natta catalysts on a carrier prepared from particulate (microspheroidal) silica and a solution of magnesium chloride and titanium alcoholate in an aliphatic acid ester, using a simple and convenient procedure which affords solid catalyst components having an improved catalytic activity in the (co)polymerization of ethylene and being capable of yielding polyethylene of satisfactory rheology.

Accordingly, the present invention provides a process for the preparation of a solid component of a catalyst for the (co)polymerization of ethylene, comprising a carrier of silica in the form of particles (50-90% by weight) and a catalytically active portion (50-10% by weight) including titanium, magnesium, chlorine and alkoxy groups. Said process comprises the following steps:
(a) preparing a solution of titanium tetraalcoholate of formula Ti(OR)₄ wherein the groups R independently represent linear or branched alkyl radicals containing from 1 to 5 carbon atoms, and of magnesium chloride in a liquid aliphatic acid ester, the molar ratio of titanium tetraalcoholate to magnesium chloride ranging from 0.2/l to 5.0/l;
(b) impregnating silica in particle form with the solution prepared in step (a) by suspending the silica particles in said solution;
(c) eliminating the ester from the suspension obtained in step (b) by means of evaporation at a temperature which does not exceed 60°C and recovering a solid composed of silica particles onto which a complex of formula Ti(OR)₄ x (0.2-5.0)MgCl₂ is deposited;
(d) reacting the solid obtained in step (c) with alkyl aluminium chloride, at an operating temperature of from 10 to 100°C and for 10 minutes to 24 hours; and
(e) recovering the solid catalyst component.

Preferably, a silicon halide is also added to the solution obtained in step (a), usually in such quantities as to afford an atomic ratio of silicon, in the silicon halide, to titanium, in the titanium tetraalcoholate, of from 0.5/l to 8.0/l. It is even more preferred to add the silicon halide in amounts such as to result in a Si/Ti ratio of from 2.0/l to 6.0/l. The use of the silicon halide further improves the activity of the catalyst.

According to the process of the present invention, a solution of titanium tetraalcoholate and magnesium chloride in a liquid aliphatic acid ester is prepared in step (a). Specific examples of titanium tetraalcoholates suitable for this purpose are titanium tetra-n-propylate, titanium tetra-n-butylate, titanium tetra-i-propylate and titanium tetra-i-butylate. The magnesium chloride to be employed is preferably a totally anhydrous, or almost totally anhydrous (water content less than 1% by weight) magnesium chloride. The liquid aliphatic acid ester preferably is selected from methyl, ethyl and propyl esters of lower (e.g. C₁-C₄) aliphatic carboxylic acids, chlorinated or non-chlorinated, such as ethyl formate, methyl acetate, ethyl acetate, propyl acetate, isopropyl acetate and ethyl chloroacetate. The most preferred ester is ethyl acetate. It is convenient to use solutions having a total concentration of titanium tetraalcoholate and magnesium chloride of 4 to 10% by weight and the molar ratio of titanium tetraalcoholate to magnesium chloride preferably is in the vicinity of or equal to 1:1 (e.g. 1.2:1 to 1:1.2).

The silicon halide - if employed - is preferably selected from silicon tetrahalides and halosilanes. Specific examples of such compounds are silicon tetrachloride, trichlorosilane, vinyl trichlorosilane, trichloroethoxy silane and chloroethyl trichlorosilane. Silicon tetrachloride is particularly preferred.

Preferably the solution of step (a) is prepared by dissolving the components in the aliphatic acid ester at room temperature or above, if possible at the reflux temperature of the ester used.

In step (b) of the process of the present invention silica particles are impregnated with the solution prepared in step (a) by suspending the silica particles in the solution. For this purpose, microspheroidal, porous silica is preferable, said silica having a particle size of from 10 to 100 »m, a SiO₂ content of >90% by weight, a surface area of from 250 to 400 m²/g, a pore volume of from 1.3 to 1.8 ml/g and an average pore diameter of from 20 to 30 nm. Preferably, this silica has undergone an activation treatment prior to the impregnation, which treatment can be carried out, e.g., by heating the silica in an inert atmosphere, at a temperature of from 100 to 650°C, over a period of from 1 to 20 hours, or by contacting the silica with an organometallic compound, such as an alkyl magnesium or alkyl aluminium compound, e.g., butyl magnesium, octyl butyl magnesium and triethyl aluminium, operating at room temperature or at higher temperatures, for example at 60°C. It is preferred to activate the silica by treatment with octyl butyl magnesium, e.g., in quantities of 10 to 20% by weight of silica. The impregnation of step (b) is preferably carried out at a temperature of from 50 to 75°C, over a period of from 0.5 to 5 hours.

In step (c), the ester is eliminated from the suspension obtained in step (b) by means of evaporation and a solid of silica particles is recovered onto which a complex of titanium tetraalcoholate and magnesium chloride in a molar ratio of from 0.2/l to 5.0/l, preferably 1:1, depending on the quantity used in step (a), is deposited. The evaporation of the aliphatic acid ester should be carried out at a temperature which does not exceed 60°C, optionally at a reduced pressure. Total evaporation of the ester is not necessary and at the end of step (c) it may still be present in quantities of up to 20% by weight, preferably not more than 5 to 10% by weight, with respect to the weight of the magnesium chloride.

In step (d) of the present process, the solid obtained in step (c) is reacted with alkyl aluminium chloride, the atomic ratio of chlorine atoms, in the alkyl aluminium chloride, to alkoxy groups, in the titanium alcoholate, preferably ranging from 0.5/l to 7.0/l. More specifically, in step (d), the solid is suspended in an inert liquid hydrocarbon such as hexane or heptane, and is contacted with an alkyl aluminium chloride, generally selected from diethyl aluminium chloride, ethyl aluminium sesquichloride, diisobutyl aluminium chloride and isobutyl aluminium dichloride, dissolved in the above hydrocarbon solvent or in a different hydrocarbon solvent. Step (d) is carried out at a temperature ranging from 10 to 100°C, for a period which, depending on the chosen operating temperature, usually varies from 10 to 24 hours. The preferred operating temperature ranges from 20 to 90°C, over a period of 10 minutes to 1 hour, and the preferred atomic ratio of chlorine to titanium in the solid ranges from 2/l to 14/l. This treatment has the effect of increasing the chlorine content in the solid catalyst component, with a simultaneous reduction, either partial or total, of the titanium from the tetravalent state to the trivalent state, and with the partial or total elimination of the alkoxy groups present.

At the end of the treatment, the solid catalyst component is recovered in step (e), is preferably washed with a liquid-aliphatic hydrocarbon solvent, such as hexane or heptane, until the chlorides have been eliminated from the washing liquid, and is finally dried.

The solid catalyst component prepared according to the present invention is composed of a particulate silica carrier (50-90% by weight) and a catalytically active portion (50-10% by weight) including titanium, magnesium, chlorine and alkoxy groups. A preferred catalyst component also contains silicon, the ratio Si/Ti preferably ranging from 0.5/l to 8.0/l, particularly from 2.0/l to 6.0/l.

The present invention also provides a catalyst for the (co)polymerization of ethylene, comprising the above solid catalyst component, combined with an organometallic compound of aluminium (co-catalyst), preferably chosen from aluminium trialkyls and alkyl aluminium halides (particularly chlorides), containing from 1 to 5 carbon atoms in the alkyl groups. Among these, aluminium trialkyls with from 2 to 4 carbon atoms in the alkyl groups, such as triethyl aluminium, tributyl aluminium and triisobutyl aluminium are particularly preferred. The catalyst of the present invention has an atomic ratio of aluminium (in the co-catalyst) to titanium (in the solid component of catalyst) which generally ranges from 20:1 to 250:1, preferably from 100:1 to 200:1.

The catalyst of the present invention can be used in polymerizations carried out by means of the suspension technique in an inert diluent or by using the gas phase method in a fluidized or stirred bed. Alpha-olefins which can be copolymerized with ethylene are generally those containing from 3 to 10 carbon atoms, preferably from 4 to 6 carbon atoms, such as butene-1, hexene-1 and 4-methyl-pentene-1. The general polymerization conditions are: temperature of from 50 to 100°C; total pressure of from 5 to 40 bar, the ratio of partial pressures of hydrogen and ethylene being from 0 to 10. There is obtained, at any rate, a high productivity in the olefinic polymer and the polymer thus obtained has excellent rheological properties and, in particular, is in the form of granules which are non-friable and do not contain fines.

In the following non-limitative examples which are intended to provide a better understanding of the present invention, a microspheroidal silica carrier is used, said carrier having a particle size ranging from 20 to 60 »m, a SiO₂ content of >99% by weight, a surface area of 320 m²/g, a pore volume of 1.65 ml/g and an average pore diameter of 25 to 26 nm.

### EXAMPLE 1

6.60 g (19.4 mmoles) of titanium tetra-n-butylate, 1.87 g (19.6 mmoles) of anhydrous magnesium chloride and 150 ml of anhydrous ethyl acetate are charged, in a nitrogen atmosphere, into a 250 ml flask equipped with reflux cooler, mechanical stirrer and thermometer. The mixture is heated to reflux (about 77°C) for 1 hour to allow the complete dissolution of the magnesium chloride.

11.4 g of microspheroidal silica, previously activated by contacting it, for 1 hour at 60°C, with a solution containing 150 ml of anhydrous n-hexane and 13 ml of 20% by weight of octyl butyl magnesium in heptane, are suspended in the solution thus obtained. The suspension is kept at a temperature of 60°C for 1 hour whereafter it is dried by evaporating the solvent at a temperature not higher than 60°C and at reduced pressure. Thereby a solid is recovered onto which the complex Ti(OBu)₄.MgCl₂ has been deposited.

The solid thus obtained is suspended in 70 ml of anhydrous n-hexane, and 18 ml of a 40% by weight solution of ethyl aluminium sesquichloride (6.08 g; 23.6 mmoles) in n-decane are added to the resulting suspension. Contact is maintained for 15 minutes at a temperature of 25°C. The solid is then recovered by filtration, washed with anhydrous n-hexane until all the chlorides in the washing liquid have been eliminated, and finally dried at reduced pressure.

A solid catalyst component is thus obtained, in solid granule form, which contains 70% by weight of silica and the catalytically active portion whereof contains magnesium, titanium, chlorine and butoxy groups in a molar ratio of 2.2:1.0:5.3:0.4.

The solid catalyst component prepared in the above way is used in a test for the polymerization of ethylene. More specifically, the polymerization is carried out in a 5 litre autoclave containing 2 litres of n-hexane. The process is carried out at a pressure of 15 bar, in the presence of hydrogen (the pressure ratio of hydrogen to ethylene being 0.47/l), at a temperature of 90°C and over a period of 2 hours, using 150 mg of the solid catalyst component and triethyl aluminium as co-catalyst, the atomic ratio of aluminium in the co-catalyst to titanium in the solid catalyst component being 50/l.

A yield equal to 3.8 kg of polyethylene per gram of solid catalyst component is thus obtained and the polyethylene has the following characteristics:

| | |
|---|---|
| - density: (ASTM D-1505) | 0.961 g/ml |
| - apparent density: (ASTM D-1895) | 0.38 g/ml |
| - MFI (2.16 kg): (Melt-Flow Index - ASTM D-1238) | 2.5 g/10' |
| - MFR: (MFR = Melt-Flow Index Ratio, defined as the ratio MFI (21.6 kg)/MFI (2.16 kg) ). | 31.4 |

The polyethylene is in granule form with the following size distribution in »m:

| | |
|---|---|
| ≧ 2000 | 0.1% by weight |
| < 2000 to ≧ 1000 | 2.8% by weight |
| < 1000 to ≧ 500 | 78.2% by weight |
| < 500 to ≧ 250 | 17.4% by weight |
| < 250 | 1.5% by weight . |

### EXAMPLE 2

6.60 g (19.4 mmoles) of titanium tetra-n-butylate, 1.87 g (19.6 mmoles) of anhydrous magnesium chloride, 150 ml of anhydrous ethyl acetate and 9.0 ml of silicon tetrachloride (13.2 g, 77.8 mmoles) are charged, in a nitrogen atmosphere, into a 250 ml flask equipped with reflux cooler, mechanical stirrer and thermometer. The mixture is heated to reflux (about 77°C) for 1 hour to allow the complete dissolution of the magnesium chloride.

11.4 g of microspheroidal silica previously activated by contacting it, for 1 hour at 60°C, with a solution containing 150 ml of anhydrous n-hexane and 13 ml of 40% by weight octyl butyl magnesium in n-heptane, are suspended in the solution thus obtained. The suspension is kept at a temperature of 60°C for 1 hour whereafter it is dried by evaporating the solvent at a temperature not higher than 60°C and at reduced pressure. Thereby a solid is recovered onto which the complex Ti(OBu)₄.MgCl₂ is deposited.

The solid thus obtained is suspended in 70 ml of anhydrous n-hexane and 18 ml of a 40% by weight solution of ethyl aluminium sesquichloride in n-decane (6.08 g; 23.6 mmoles) are added to the resulting suspension. Contact is maintained for 15 minutes at a temperature of 25°C. The solid is then recovered by filtration, washed with anhydrous n-hexane until all the chlorides in the washing liquid have been eliminated, and finally dried at reduced pressure.

A solid catalyst component is thus obtained, in solid granule form, which contains 70% by weight of silica and the catalytically active portion whereof contains magnesium, titanium, chlorine and butoxy groups in a molar ratio of 1.4:1.0:7.3:0.4.

The solid catalyst component prepared in the above way is used in a test for the polymerization of ethylene. More specifically, the polymerization is carried out in a 5 litre autoclave containing 2 litres of n-hexane. The process is carried out at a pressure of 15 bar, in the presence of hydrogen (pressure ratio of hydrogen to ethylene of 0.47/l), at a temperature of 90°C over a period of 2 hours, using 75 mg of the solid catalyst component and triethyl aluminium as co-catalyst, the atomic ratio Al/Ti being 100/1.

A yield equal to 6.6 kg of polyethylene per gram of the solid catalyst component is obtained and the polyethylene has the following characteristics:

| | |
|---|---|
| - density: | 0.961 g/ml |
| - apparent density: | 0.31 g/ml |
| - MFI (2.16 kg): | 3.3 g/10' |
| - MFR: | 30.2 |

The polyethylene is in granule form with the following size distribution in »m:

| | |
|---|---|
| ≧ 2000 | 5.7% by weight |
| < 2000 to ≧ 1000 | 45.8% by weight |
| < 1000 to ≧ 500 | 45.0% by weight |
| < 500 to ≧ 250 | 2.6% by weight |
| < 250 | 0.9% by weight . |

### EXAMPLE 3

6.60 g (19.4 mmoles) of titanium tetra-n-butylate, 1.87 g (19.6 mmoles) of anhydrous magnesium chloride, 150 ml of anhydrous ethyl acetate and 4.5 ml of silicon tetrachloride (6.6 g; 38.9 mmoles) are charged, in a nitrogen atmosphere, into a 250 ml flask equipped with reflux cooler, mechanical stirrer and thermometer. The mixture is heated to reflux temperature (about 77°C) for 1 hour to allow the complete dissolution of the magnesium chloride.

11.4 g of microspheroidal silica, previously activated by contacting it, for 1 hour at 60°C, with a solution containing 150 ml of anhydrous n-hexane and 13 ml of 40% by weight of octyl butyl magnesium in n-heptane, are suspended in the solution thus obtained. The suspension is kept at a temperature of 60°C for 1 hour whereafter it is dried by evaporating the solvent at a temperature not higher than 60°C and at reduced pressure. Thereby a solid is recovered onto which the complex Ti(OBu)₄.MgCl₂ is deposited.

The solid thus obtained is suspended in 70 ml of anhydrous n-hexane,and 18 ml of a 40% by weight solution of ethyl aluminium sesquichloride in n-decane (6.08 g; 23.6 mmoles) are added to the resulting suspension. Contact is maintained for 15 minutes at a temperature of 25°C. The solid is then recovered by filtration, washed with anhydrous n-hexane until all the chlorides in the washing liquid have been eliminated, and is finally dried at reduced pressure.

A solid catalyst component is thus obtained, in solid granule form, which contains 70% by weight of silica and the catalytically active portion whereof contains magnesium, titanium, chlorine and butoxy groups in a molar ration of 1.5:1.0:6.0:0.7.

The solid catalyst component prepared in the above way is used in a test for the polymerization of ethylene. More specifically, the polymerization is carried out in a 5 litre autoclave containing 2 litres of n-hexane. The process is carried out at a pressure of 15 bar, in the presence of hydrogen (pressure ratio of hydrogen to ethylene of 0.47/l), at a temperature of 90°C, over a period of 2 hours, using 100 mg of the solid catalyst component and triethyl aluminium as co-catalyst, the atomic ratio Al/Ti being equal to 70/1.

A yield equal to 6.8 kg of polyethylene per gram of the solid catalyst component is obtained and the polyethylene has the following characteristics:

| | |
|---|---|
| - density: | 0.960 g/ml |
| - apparent density: | 0.25 g/ml |
| - MFI (2.16 kg): | 1.96 g/10' |
| - MFR: | 34.7 |

The polyethylene is in granule form with the following size distribution in »m:

| | |
|---|---|
| ≧ 2000 | 14.5% by weight |
| < 2000 to ≧ 1000 | 46.5% by weight |
| < 1000 to ≧ 500 | 30.5% by weight |
| < 500 to ≧ 250 | 6.5% by weight |
| < 250 | 2.0% by weight . |

## Claims

1. Process for the preparation of a solid component of a catalyst for the homo- or copolymerization of ethylene, comprising a carrier of particulate silica (50 to 90% by weight) and a catalytically active portion (50 to 10% by weight) containing titanium, magnesium, chlorine and alkoxy groups, said process comprising the steps of:
(a) preparing a solution of titanium tetraalcoholate of formula Ti(OR)₄ wherein R represents linear or branched C₁-C₅ alkyl radicals, and magnesium chloride in a liquid ester of an aliphatic acid, the molar ratio of titanium tetraalcoholate to magnesium chloride ranging from 0.2/l to 5.0/l;
(b) impregnating silica particles with the solution prepared in step (a) by suspending the silica particles in said solution;
(c) eliminating the ester from the suspension obtained in step (b) by means of evaporation at a temperature not exceeding 60°C and recovering silica particles onto which a complex of formula Ti(OR)₄ x (0.2-5.0)MgCl₂ is deposited;
(d) reacting the solid obtained in step (c) with alkyl aluminium chloride, at a temperature of from 10 to 100°C and for 10 minutes to 24 hours; and
(e) recovering the solid catalyst component.

2. Process according to claim 1, wherein a silicon halide preferably selected from silicon tetrahalides, halosilanes and mixtures thereof is added to the solution of step (a) in amounts such as to result in an atomic ratio of silicon to titanium of from 0.5/l to 8.0/l, particularly of from 2.0/l to 6.0/l.

3. Process according to claim 2, wherein the silicon halide is selected from silicon tetrachloride, trichlorosilane, vinyl trichlorosilane, trichloroethoxy silane, chloroethyl trichlorosilane and mixtures thereof and preferably is silicon tetrachloride.

4. Process according to any one of claims 1 to 3, wherein in step (a) the titanium tetraalcoholate is selected from titanium tetra-n-propylate, titanium tetra-n-butylate, titanium tetra-i-propylate, titanium tetra-i-butylate and mixtures thereof and/or the aliphatic acid ester is selected from ethyl formate, methyl acetate, ethyl acetate, propyl acetate, isopropyl acetate and ethyl chloroacetate, preferably ethyl acetate, the molar ratio of titanium tetraalcoholate to magnesium chloride in the solution being preferably 1:1.

5. Process according to any one of claims 1 to 4, wherein the silica used in step (b) is a microspheroidal, porous silica with a particle size of from 10 to 100 »m, a SiO₂ content of >90% by weight, a surface area of from 250 to 400 m²/g, a pore volume ranging from 1.3 to 1.8 ml/g and an average pore diameter of from 20 to 30 nm, said silica having been activated by heating in an inert atmosphere and/or by contacting it with an organometallic compound of magnesium and/or aluminium.

6. Process according to any one of claims 1 to 5, wherein in step (b) the temperature ranges from 50 to 75°C for 0.5 to 5 hours.

7. Process according to any one of claims 1 to 6, wherein in step (c) a complex containing titanium tetra-alcoholate and magnesium chloride in a molar ratio of about 1:1 is deposited on the carrier.

8. Process according to any one of claims 1 to 7, wherein in step (d) the alkyl aluminium chloride is selected from diethyl aluminium chloride, ethyl aluminium sesquichloride, diisobutyl aluminium chloride, isobutyl aluminium dichloride and mixtures thereof.

9. Process according to any one of claims 1 to 8, wherein in step (d) the solid of step (c) is suspended in an-inert liquid hydrocarbon, the atomic ratio of chlorine atoms in the alkyl aluminium chloride to alkoxy groups in the titanium tetraalcoholate ranges from 0.5/l to 7.0/l and the temperature employed ranges from 20 to 90°C for 10 minutes to 1 hour.

10. Process for the homo- or copolymerization of ethylene wherein
a) a solid component of a catalyst comprising a carrier of particulate silica (50 to 90% by weight) and a catalytically active portion (50 to 10% by weight) containing titanium, magnesium, chlorine and alkoxy groups is prepared according to any of claims 1 to 9, and
b) the obtained catalyst component, optionally combined with an organometallic compound of aluminium, is employed for the polymerization reaction.

## Patentansprüche

1. Verfahren zur Herstellung einer festen Komponente eines Katalysators für die Homo- oder Copolymerisation von Ethylen, umfassend einen Träger aus partikulärem Siliciumdioxid (50 bis 90 Gew.-%) und einem katalytisch aktiven Anteil (50 bis 10 Gew.-%), der Titan, Magnesium, Chlor und Alkoxygruppen enthält, worin das Verfahren die Schritte umfaßt:
(a) Herstellen einer Lösung aus Titantetraalkoholat der Formel Ti(OR)₄, in der R lineare oder verzweigte C₁-C₆-Alkylreste bedeutet, und Magnesiumchlorid in einem flüssigen Ester einer aliphatischen Säure, wobei das Molverhältnis von Titantetraalkoholat zu Magnesiumchlorid im Bereich von 0.2/1 bis 5.0/1 liegt,
(b) Imprägnieren von Siliciumdioxidteilchen mit der in Schritt (a) hergestellten Lösung, indem die Siliciumdioxidteilchen in der Lösung suspendiert werden,
(c) Entfernen des Esters aus der in Schritt (b) erhaltenen Lösung durch Verdampfen bei einer Temperatur nicht über 60 °C und Gewinnen der Siliciumdioxidteilchen, auf denen ein Komplex der Formel Ti(OR)₄ x (0.2-5.0)MgCl₂ abgelagert ist,
(d) Umsetzen des in Schritt (c) erhaltenen Feststoffs mit Alkylaluminiumchlorid bei einer Temperatur zwischen 10 und 100 °C 10 Minuten bis 24 Stunden lang und
(e) Gewinnen der festen Katalysatorkomponente.

2. Verfahren gemäß Anspruch 1, worin ein Siliciumhalogenid, vorzugsweise ausgewählt aus Siliciumtetrahalogeniden, Halosilanen und deren Mischungen, der Lösung von Schritt (a) zugesetzt wird in Mengen, die zu einem Atomverhältnis von Silicium zu Titan zwischen 0.5/1 und 8.0/1, insbesondere zwischen 2.0/1 und 6.0/1, führen.

3. Verfahren gemäß Anspruch 2, worin das Siliciumhalogenid ausgewählt ist aus Siliciumtetrachlorid, Trichlorsilan, Vinyltrichlorsilan, Trichlorethoxysilan, Chlorethyltrichlorsilan und deren Mischungen und vorzugsweise Siliciumtetrachlorid ist.

4. Verfahren gemäß irgendeinem der Ansprüche 1 bis 3, worin in Schritt (a) das Titantetraalkoholat ausgewählt ist aus Titan-tetra-n-propylat, Titan-tetra-n-butylat, Titan-tetra-i-propylat, Titan-tetra-i-butylat und deren Mischungen und/oder der aliphatische Säureester ausgewählt ist aus Ethylformiat, Methylacetat, Ethylacetat, Propylacetat, Isopropylacetat und Ethylchloracetat, vorzugsweise Ethylacetat, wobei das Molverhältnis von Titantetraalkoholat zu Magnesiumchlorid in der Lösung vorzugsweise 1 : 1 ist.

5. Verfahren gemäß irgendeinem der Ansprüche 1 bis 4, worin das in Schritt (b) verwendete Siliciumdioxid microsphäroidales, poröses Siliciumdioxid mit einer Teilchengröße zwischen 10 und 100 »m, einem SiO₂-Gehalt von > 90 Gew.-%, einer Oberfläche von 250 bis 400 m²/g, einem Porenvolumen im Bereich von 1.3 bis 1.8 ml/g und einem mittleren Porendurchmesser zwischen 20 und 30 nm ist, wobei das Siliciumdioxid durch Erhitzen in einer inerten Atmosphäre und/oder durch Kontaktieren mit einer metallorganischen Verbindung des Magnesiums und/oder Aluminiums aktiviert worden ist.

6. Verfahren gemäß irgendeinem der Ansprüche 1 bis 5, worin in Schritt (b) die Temperatur 0.5 bis 5 Stunden lang im Bereich von 50 bis 75 °C liegt.

7. Verfahren gemäß irgendeinem der Ansprüche 1 bis 6, worin in Schritt (c) ein Komplex, der Titantetraalkoholat und Magnesiumchlorid in einem Molverhältnis von etwa 1 : 1 enthält, auf dem Träger abgelagert wird.

8. Verfahren gemäß irgendeinem der Ansprüche 1 bis 7, worin in Schritt (d) das Alkylaluminiumchlorid ausgewählt ist aus Diethylaluminiumchlorid, Ethylaluminiumsesquichlorid, Diisobutylaluminiumchlorid, Isobutylaluminiumdichlorid und deren Mischungen.

9. Verfahren gemäß irgendeinem der Ansprüche 1 bis 8, worin in Schritt (d) der Feststoff aus Schritt (c) in einem inerten flüssigen Kohlenwasserstoff suspendiert wird, das Atomverhältnis zwischen Chloratomen im Alkylaluminiumchlorid und Alkoxygruppen im Titantetraalkoholat im Bereich von 0.5/1 bis 7.0/1 und die eingesetzte Temperatur 10 Minuten bis 1 Stunde lang im Bereich von 20 bis 90 °C liegt.

10. Verfahren zur Homo- und Copolymerisation von Ethylen, worin
a) eine feste Komponente eines Katalysators, welche einen Träger aus partikulärem Siliciumdioxid (50 bis 90 Gew.-%) und einen katalytsich aktiven Anteil (50 bis 10 Gew.-%), der Titan, Magnesium, Chlor und Alkoxygruppen enthält, umfaßt, gemäß einem der Ansprüche 1 bis 9 hergestellt wird und
b) die erhaltene Katalysatorkomponente, gegebenenfalls kombiniert mit einer metallorganischen Verbindung des Aluminiums, für die Polymerisationsreaktion eingesetzt wird.

## Revendications

1. Procédé de préparation d'un composant solide d'un catalyseur d'homopolymérisation ou de copolymérisation de l'éthylène, comprenant un support de silice en particules (50 à 90 % en poids) et un constituant catalytiquement actif (50 à 10 % en poids) contenant du titane, du magnésium, du chlore et des groupes alcoxy, ledit procédé comprenant les étapes consistant à :
a) préparer une solution d'un tétra-alcoolate de titane, de formule Ti(OR)₄ dans laquelle les R représentent des radicaux alkyle en C₁₋₅ linéaires ou ramifiés, et de chlorure de magnésium dans un liquide qui est un ester d'acide aliphatique, le rapport molaire du tétra-alcoolate de titane au chlorure de magnésium valant de 0,2/1 à 5,0/1 ;
b) imprégner des particules de silice avec la solution préparée au cours de l'étape (a), en mettant les particules de silice en suspension dans ladite solution ;
c) chasser l'ester de la suspension obtenue au cours de l'étape (b), par évaporation à une température n'excédant pas 60°C, et récupérer les particules de silice, sur lesquelles s'est déposé un complexe de formule [Ti(OR)₄, 0,2-5,0 MgCl₂] ;
d) faire réagir le solide obtenu au cours de l'étape (c) avec un chlorure d'alkyl-aluminium, à une température de 10°C à 100°C, durant un laps de temps de 10 minutes à 24 heures ; et
e) récupérer le composant solide de catalyseur.

2. Procédé conforme à la revendication 1, dans lequel on ajoute, à la solution de l'étape (a), un halogénure de silicium, choisi de préférence parmi les tétrahalogénures de silicium, les halogéno-silanes et les mélanges de ces composés, en une quantité telle que le rapport atomique du silicium au titane vaut de 0,5/1 à 8,0/1, et en particulier de 2,0/1 à 6,0/1.

3. Procédé conforme à la revendication 2, dans lequel l'halogénure de silicium est choisi parmi le tétrachlorure de silicium, le trichlorosilane, le vinyl-trichlorosilane, l'éthoxy-trichlorosilane, le chloroéthyl-trichlorosilane et leurs mélanges, et est de préférence du tétrachlorure de silicium.

4. Procédé conforme à l'une des revendications 1 à 3, dans lequel, dans l'étape (a), le tétra-alcoolate de titane est choisi parmi le tétra-n-propylate de titane, le tétra-n-butylate de titane, le tétra-i-propylate de titane, le tétra-i-butylate de titane et leurs mélanges, et/ou l'ester d'acide aliphatique est choisi parmi le formiate d'éthyle, l'acétate de méthyle, l'acétate d'éthyle, l'acétate de propyle, l'acétate d'isopropyle et le chloroacétate d'éthyle, et est de préférence de l'acétate d'éthyle, et le rapport molaire du tétra-alcoolate de titane au chlorure de magnésium dans la solution vaut de préférence 1/1.

5. Procédé conforme à l'une des revendications 1 à 4, dans lequel la silice utilisée dans l'étape (b) est une silice poreuse microsphéroïdale dont les particules ont une taille de 10 à 100 »m, dont la teneur en SiO₂ est supérieure à 90 % en poids, dont l'aire spécifique vaut de 250 à 400 m²/g, dont le volume poreux vaut de 1,3 à 1,8 ml/g et dont les pores ont un diamètre moyen de 20 à 30 nm, ladite silice ayant été activée par chauffage sous atmosphère inerte et/ou par contact avec un composé organométallique du magnésium et/ou de l'aluminium.

6. Procédé conforme à l'une des revendications 1 à 5, dans lequel, dans l'étape (b), la température vaut de 50°C à 75°C, pendant un laps de temps de 0,5 à 5 heures.

7. Procédé conforme à l'une des revendications 1 à 6, dans lequel, dans l'étape (c), se dépose sur le support un complexe contenant un tétra-alcoolate de titane et du chlorure de magnésium en un rapport molaire d'environ 1/1.

8. Procédé conforme à l'une des revendications 1 à 7, dans lequel, dans l'étape (d), le chlorure d'alkyl-aluminium est choisi parmi le chlorure de diéthyl-aluminium, le sesquichlorure d'éthyl-aluminium, le chlorure de diisobutyl-aluminium, le dichlorure d'isobutyl-alumimum et leurs mélanges.

9. Procédé conforme à l'une des revendications 1 à 8, dans lequel, dans l'étape (d), on met le solide obtenu dans l'étape (c) en suspension dans un hydrocarbure liquide inerte, le rapport molaire des atomes de chlore du chlorure d'alkyl-aluminium aux groupes alcoxy du tétra-alcoolate de titane vaut de 0,5/1 à 7,0/1, et la température opératoire vaut de 20°C à 90°C, pendant un laps de temps de 10 minutes à 1 heure.

10. Procédé d'homopolymérisation ou de copolymérisation de l'éthylène, dans lequel
a) on prépare, conformément à l'une des revendications 1 à 9, un composant solide de catalyseur, comprenant un support de silice en particules (50 à 90 % en poids) et un constituant catalytiquement actif (50 à 10 % en poids) contenant du titane, du magnésium, du chlore et des groupes alcoxy, et
b) on utilise, pour la réaction de polymérisation, le composant de catalyseur obtenu, éventuellement combiné avec un composé organométallique de l'aluminium.
